# EUROPEAN PATENT SPECIFICATION

(11) **EP 3 738 822 B1**
(45) Date of publication and mention of the grant of the patent: **03.08.2022**
(21) Application number: 20170734.6
(22) Date of filing: 21.04.2020
(51) Int. Cl.: B60N 2/30, B60N 2/015, B62D 47/00, B62D 25/02, B60R 22/26

(54) **MOBILITY VEHICLE**
MOBILITÄTSFAHRZEUG
VÉHICULE DE MOBILITÉ

(30) Priority: 26.04.2019 EP 19171406
(43) Date of publication of application: 18.11.2020
(73) Proprietor: Allied Vehicles Limited, Glasgow, Lanarkshire G22 6LJ (GB)
(72) Inventor: BARNARD, Greg, Glasgow, G22 6LJ (GB)
(74) Representative: HGF

(56) References cited:
- FR-A1- 2 920 012
- US-A1- 2005 099 047
- US-B1- 6 174 017

## Description

### FIELD OF THE INVENTION

The invention relates to a mobility vehicle and in particular to a foldable seat for a mobility vehicle.

### BACKGROUND OF THE INVENTION

Mobility vehicles allow disabled persons to travel with more ease and comfort than they would be able to in a standard vehicle. Wheelchair users can benefit from a type of mobility vehicle known as a 'wheelchair accessible vehicle' (WAV), which allows a wheelchair user to travel in or drive the vehicle whilst remaining seated in their wheelchair. By staying in the wheelchair, the user does not need to stow the wheelchair inside the vehicle. Many wheelchair users find using a hoist to move from their wheelchair to a car seat uncomfortable and time consuming, and therefore prefer to stay in their wheelchair.

A large range of WAVs are available, ranging from small cars to large multi-purpose vehicles (MPVs). WAVs may include an access ramp, wheelchair restraints, wheelchair occupant seatbelts, and a lowered floor (or raised roof) to assist entry and to provide additional headroom.

To fit a wheelchair and user inside a large vehicle, sometimes only a ramp is required as the vehicle has enough space to accommodate the chair and user in the rear of the vehicle. However, when a smaller vehicle is used, significant modification is usually required. The desire is to have enough space for the wheelchair and user to move in and out of the vehicle with ease, whilst avoiding any difficult manoeuvres that may damage the vehicle or wheelchair.

The usual modifications for transforming a standard car or MPV into a WAV are to fit an access ramp via the rear door of the vehicle, lower the floor in the rear of the vehicle to allow the wheelchair user to stay seated in the wheelchair when travelling in the vehicle, and wheelchair seatbelts/restraints. To prepare the vehicle for entering with a wheelchair, the rear seats are folded forward, the rear door is opened, and the ramp is lowered. The wheelchair and user are then wheeled/winched into the travelling position inside the vehicle, which typically includes at least a part of the vehicle usually used for cargo and also part of the vehicle where rear seats would be positioned.

However, although many cars or MPVs include factory specification rear seats that can be folded to increase luggage capacity, such "fold flat" seats often do not create adequate floor space or headroom for a wheelchair passenger.

FR 2 920 012 A1 (PEUGEOT) describes a method and related apparatus for moving an adjustable seat, wherein the base of the backrest is disintegrated from movable and fixed slides (9a, 9b) when the backrest is folded against the base. US 6 174 017 B1 (DAIMLER) describes a vehicle seat which articulates and dumps, wherein there is an articulation link that allows the seat frame to rotate down to the bottom frame while the seatback frame articulates forward and downwardly toward the seat frame. US 2005/099047A1 (ELTERMAN) describes a folding seat assembly for a vehicle that includes a seat base pivotally mounted to the floor of the vehicle, and a seat back mounted to the seat base and pivotable from a perpendicular to a parallel orientation to the seat base.

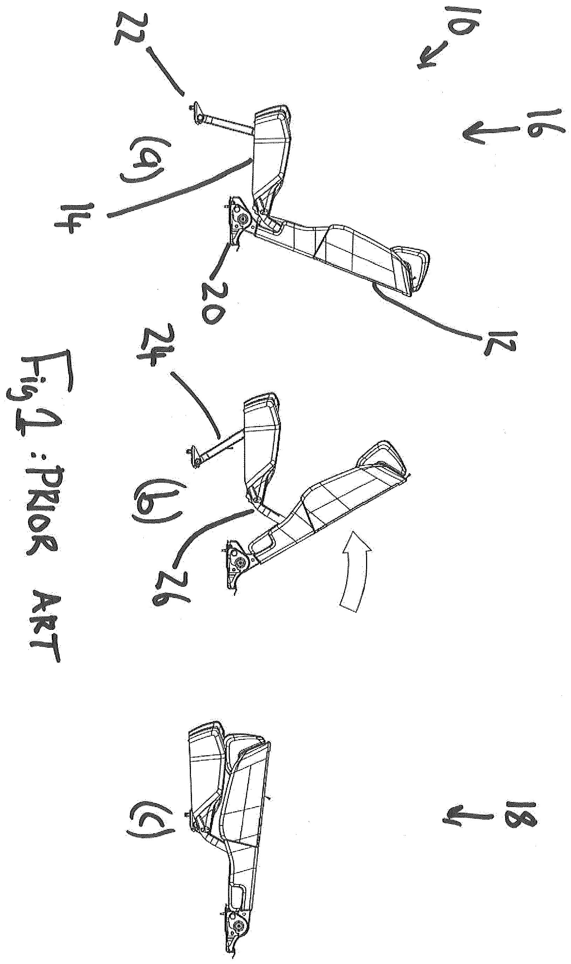

One common type of fold flat seat is a "parallelogram" design in which the backrest pivots at a connection to a vehicle bulkhead and where the backrest and base move together (as depicted in Fig. 1(a)-(c) and discussed in further detail below) such that the rear of the backrest lies flat on the seat base and extends the vehicle luggage area.

When stowed in this way, parallelogram seats to not provide any increase in usable floor space.

Whilst it might be possible in principle to remove such seats entirely in order to increase the useable floor space, this would make it impracticable for the seats to be used at other times in a conventional manner for passengers who do not use a wheelchair.

There remains a need to address or mitigate at least one or more of the aforementioned problems.

### SUMMARY OF THE INVENTION

According to independent claim 1, there is provided a method of adapting a translatably foldable seat of a vehicle;
wherein the translatably foldable seat comprises a back component and a base component;
wherein the back component comprises at its lower end a lower pivotable connection to the vehicle; wherein the base component comprises a translatable coupling to the vehicle; and wherein the back component is pivotably coupled to the base component via an intermediate coupling arrangement extending between an intermediate region of the back component and the base component;
wherein the translatably foldable seat is moveable between a seated configuration in which the back component is generally upright and a stowed configuration in which the back component has pivoted around the lower pivotable connection to be generally horizontal; and
wherein, when the back component pivots from the seated configuration towards the stowed configuration, the base component translates forward and away from the lower pivotable connection;
the method comprising:
   replacing the translatable coupling with a forward pivotable connection and a rear releasable coupling;
   providing a stop formation, positioned to engage with the lower end of the back component and thereby define the position of the back component in an intermediate configuration in which the back component is at least generally vertical, or tipped at least slightly forward;
   coupling the base component to the vehicle at the forward pivotable connection and the rear releasable coupling; and removing the lower pivotable connection between the back component and the vehicle to thereby provide an adapted foldable vehicle seat the adapted foldable vehicle seat being thereby movable between a first, seated configuration in which the back component is generally upright and the base component is generally horizontal; and a second configuration in which the back component is generally aligned with the base component and the base component is generally upright; via the intermediate configuration.

The back component of the adapted foldable vehicle seat is thus pivotable around the intermediate pivotable connection in relation to the base component. Upon release of the releasable rear connector, the base component (and thus the adapted foldable vehicle seat as a whole) is in turn pivotable around the forward pivotable connector.

The adapted foldable seat is thereby movable between a first, seated configuration in which the back component is generally upright and the base component is generally horizontal; and a second configuration in which the back component is generally aligned with the base component and the base component is generally upright.

The method provides for a translatable foldable vehicle seat to be converted into a "tip and tumble" foldable vehicle seat. Since the entire adapted foldable seat can be pivoted forward around the forward pivotable connection, the method effectively increases the useable floor space of a vehicle, and to assist in accommodating a wheelchair passenger. The method further enables the majority of the vehicle's original translatably foldable seat to be re-used.

The method may comprise mounting the base component to a frame, wherein the frame comprises the forward pivotable connection and the rearward releasable coupling. The method may comprise removing at least a part of the translatable coupling and then mounting the base component to the frame.

The adapted vehicle seat is movable between the first configuration and the second configuration via an intermediate configuration.

In the intermediate configuration, the back component is at least generally vertical, or tipped at least slightly forward. Next, the adapted foldable seat can be moved from the intermediate configuration to the second configuration by releasing the releasable rearward coupling and pivoting the adapted foldable seat around the forward pivotable connector, whilst further pivoting the back component around the intermediate pivotable connector so as to generally align the back component with the base component.

In some circumstances, at least a part of the back component of the translatably foldable seat rests against a part of the vehicle (such as a part of the vehicle trim or a bulkhead, wheel arch or the like) in the seated configuration.

The adapted vehicle seat no longer comprises a lower pivotable connection, such that the lower end of the back component swings rearwards in relation to the base component as the seat back component pivots around the intermediate pivotable connection.

The method may therefore comprise adapting the vehicle in order to accommodate rearward movement of the lower end of the back component, when the back component is moved from the first configuration towards the second configuration.

The method may comprise adapting the vehicle by removing or adapting vehicle interior trim. The method may comprise adapting the vehicle by providing a recess.

The recess may be provided by removing or adapting a portion of the interior trim of the vehicle. Providing the recess may further comprise adapting the shape of a bulkhead or other supporting structure for the translatably foldable vehicle seat.

The recess may function as a stop formation.

The lower end of the back component may be provided with an engagement formation to engage with the stop formation, and optionally slide in relation thereto when the adapted foldable seat pivots around the forward pivotable connection.

The method may comprise adapting the lower end of the back component, by removing a residual part of the lower pivotable connection and replacing with an engagement formation; and/or by covering a residual part of the lower pivotable connection or lower end of the back component, to form an engagement formation.

According to independent claim 6, there is provided a vehicle comprising a foldable seat; the foldable seat having a back component and a base component;
wherein the back component is pivotably coupled to the base component via an intermediate coupling arrangement extending between an intermediate region of the back component and the base component;
wherein the base component is coupled to the vehicle at a forward pivotable connection and a rearward releasable connection;
wherein the vehicle comprises a stop formation positioned to engage with a lower end of the back component when the back component pivots around the intermediate pivotable connection to a position in which the back component is at least generally vertical, or tipped at least slightly forward;
wherein the foldable seat is movable between a first, seated configuration in which the back component is generally upright and the base component is generally horizontal; and a second configuration in which the back component is generally aligned with the base component and the base component is generally upright; via an intermediate configuration in which the lower end of the back component is engaged with the stop formation.

The user is therefore urged to pivot the seat around the forward pivotable connector when the back component is relatively upright. The back component thereby provides a degree of leverage when pivoting the seat forwards and in addition, the centre of balance moves forward over the forward pivotable connection at a relatively earlier stage of motion. The seat is therefore easier to move between the first and second configurations than, for example, "tip and tumble" designs in which the seat back folds flat before the entire seat must be lifted.

The foldable seat may be mounted to or adjacent a bulkhead (such as a wheel arch, transmission tunnel, a part of the interior trim of the vehicle, a structure separating the passenger and luggage compartments, or the like).

The vehicle may be adapted to accommodate rearward movement of the lower end of the back component when the back component is moved from the first configuration towards the intermediate configuration.

The vehicle may comprise a recess to accommodate such rearward movement of the lower end of the backup component. The recess may be provided in a part of the vehicle trim, for example by removing or adapting a part of the vehicle trim. The recess may be provided in a bulkhead or other structure to which, or adjacent to which, the seat is mounted.

The recess may function as a stop formation.

The lower end of the back component may be provided with an engagement formation to engage with the stop formation, and optionally slide in relation thereto when the adapted foldable seat pivots around the forward pivotable connection.

The stop formation and/or the engagement formation may be provided with a degree of resilience so as to at least partially buffer movement of the seat into the intermediate configuration. stop formation and engagement formation maybe slidable in relation to one another to facilitate movement between the intermediate configuration and the second configuration.

The forward pivotable connection may be positioned under the base component at or near the front of the base component. The rearward releasable connection may be positioned under the base component at or near the rear of the base component.

The base component may be mounted to a frame, where in the frame comprises the forward pivotable connection and the rearward releasable coupling. The rearward releasable coupling may comprise a latch, which may be releasably by a lever or foot pedal or the like, as known to one skilled in the art.

The frame may comprise front leg portions and rear leg portions, by which the base component is supported. Longitudinal frame portions may extend therebetween.

The rear leg portion may be pivotable in relation to the base component. The rear leg portion may comprise at least a part of the rearward releasable connection and be pivotally connected to the base component above the releasable connection.

The frame may further comprise at least one parallel connecting member, pivotably connected to both the first and second leg portions, whereby the orientation of the rear leg portion is maintained (e.g. generally parallel to the first leg portion) as the seat pivots around the forward pivotable connector.

The frame may comprise leg assemblies at or near each corner thereof. The frame may comprise a front leg assembly extending laterally under the base component. the frame may comprise a rear leg assembly extending laterally under the base component.

The frame may further comprise a seatbelt fixing or fixings.

The vehicle seat, or at least the back component and base component thereof, may be releasably secured to the vehicle.

For example, the forward pivotable connection may be releasable. Alternatively, embodiment may comprise a said frame wherein the frame comprises a forward releasable connection.

The foldable seat may be fixed to sliders on the floor of the vehicle, whereby the seat may be moved forwards along the sliders, in particular when in the second configuration.

The intermediate coupling arrangement may comprise one or more armatures extending from the base component to the intermediate pivotable connection. The armatures may be generally arcuate, so as to follow the profile of the vehicle seat. The Intermediate coupling arrangement may be embedded within or recessed in relation to cushions of a seating area of the vehicle seat.

The foldable seat may be latched or latchable in one or more of the first, intermediate or second configurations. Such latching mechanisms may be provided as part of the foldable seat itself, or may be between the foldable seat and one or more parts of the vehicle.

The foldable seat may be a rear seat of the vehicle.

The vehicle may comprise two, or more than two, foldable seats in accordance with the invention.

The vehicle may be an MPV (multi-purpose vehicle).

The foldable seat may be obtained by the method disclosed herein.

Motion of the foldable vehicle seat between the first and second configurations, between the first and intermediate configurations and/or between the second and intermediate configurations may be biased and/or damped.

The seat may be biased from the intermediate configuration towards the second configuration and optionally motion may be damped in one or both directions.

The foldable vehicle seat disclosed herein may further comprise one or more biased members (e.g. a gas strut, a coiled spring or the like) positioned to provide an assistive force (and or damping) to motion of the vehicle seat between first and second configurations.

For example one or more biased members may be connected diagonally between the front and rear leg portions of the frame, to resist elongation and/or compression during movement of the seat. For example one or more said pivotable connections may be provided with a biasing member, such as a leaf or coiled spring, which act to spring bias motion of the foldable seat.

According to independent claim 11, there is provided a foldable vehicle seat apparatus comprising:
a foldable vehicle seat having:
   a back component; and a base component; wherein the back component is pivotably coupled to the base component via an intermediate coupling arrangement extending between an intermediate region of the back component and the base component;
   a forward pivotable connection for connecting the base component to a vehicle;
   a rearward releasable connection for connecting the base component to a vehicle behind the forward pivotable connection; and
the apparatus further comprising a stop formation positioned in fixed relation to the forward pivotable connection and positioned to engage with a lower end of the back component when the back component pivots around the intermediate pivotable connection to a position in which the back component is at least generally vertical, or tipped at least slightly forward;
wherein the foldable seat is movable between a first, seated configuration in which the back component is generally upright and the base component is generally horizontal; and a second configuration in which the back component is generally aligned with the base component and the base component is generally upright; via an intermediate configuration in which the lower end of the back component is engaged with the stop formation.

In use, the base component may be attached to the vehicle (e.g. to a vehicle floor). The stop formation may be separate therefrom and be attachable to or forming part of a vehicle, such as an adapted vehicle as disclosed herein.

The term "foldable" (vehicle) seat refers to a seat which has a first, seated configuration in which the seat back component (normally comprising padding in the form of one or more seat back cushions) extends generally upward from a rear part of a base component (normally comprising padding, in the form of one or more seat base cushions), and a second, stowed configuration in which the seat back component has pivoted towards the seat base component.

Typically, in the stowed configuration, the seat back component rests against (e.g. upon) the seat base component, such that rear of the seat back component is oriented generally upwards (for example, such that it lies generally horizontally, when stowed).

The term "translatably" foldable seat refers to a foldable seat in which the seat base component translates forward while the seat back component pivots towards the stowed configuration. It will be understood that when the translatable folding seat moves between stowed and seated configurations, the orientation of seat base component may remain unchanged.

The terms front, forward and rearward, rear, the like refer to the orientation of a seat occupant who, when sitting on a seat will be facing forward. It will be understood that a vehicle seat will also typically (but not exclusively) be oriented such that the seat occupants face towards the front of the vehicle.

The skilled person will understand that terms such as "generally upright" and "generally horizontal" as applied to components of a vehicle seat necessarily refer to features having a relatively complex shape and configuration adapted to comfortably seat a vehicle occupant. These terms should therefore not be interpreted restrictively to refer to precisely horizontal or vertical orientations, but rather to accommodate a degree of deviation and variation therefrom as required for comfort.

The various pivotable connectors disclosed herein rotate around axes which extend generally laterally, i.e. perpendicular to a longitudinal orientation extending from the front to the back of the seat, and generally horizontally. Thus the pivotable connectors across the vehicle seat and, in use, the vehicle.

### BRIEF DESCRIPTION OF THE DRAWINGS

Non-limiting example embodiments the present invention will now be described with reference to the accompanying drawings in which:
Figure 1 shows an elevation of a foldable vehicle seat according to the prior art, where (a) shows the seat in the seated configuration, (b) shows the seat in transition between the seated and the stowed configuration, and (c) shows the seat in a stowed configuration;
Figure 2 shows a plurality of folding seats according to the prior art and in Figure 1;
Figure 3 shows an apparatus according to an embodiment of the present invention, showing a plurality of folding seats;
Figure 4 shows an apparatus according to an embodiment of the present invention, showing a seat in 4 different configurations; (a) in a seated configuration, (b) in the seated configuration with the back component disconnected from the car, (c) partially stowed configuration, (d) in the stowed configuration.
Figure 5 shows another view of the apparatus according to Figure 4, showing the seat attached to the apparatus (a) and detached from the apparatus (b).
Figure 6 shows an elevation of the apparatus according to Figure 4, without the seat, showing the apparatus in a first position which puts the seat into the seated configuration (a), and a second position which puts the seat into the stowed configuration (b).
Figure 7 shows a section of a vehicle which the present invention would be used in, showing the section as standard (aa,ab) and modified (ba,bb).

### DETAILED DESCRIPTION]

Figure 1 shows a prior art "parallelogram" type folding vehicle seat 10. Three views are shown, (a) where the seat 10 is in the seated configuration 16, (b) where the seat is in an transition between the seated and stowed configuration, and (c) where the seat is in a stowed configuration 18. The folding seat shown is designed for a vehicle such as a car or MPV, and usually is fitted in the rear of the vehicle, behind the front seats.

The seat 10 comprises a back component 12 and a base component 14. In normal use, a user would sit on the base component 14 and rest their back on the back component 12, facing towards the front of the vehicle, which is towards the left in Figure 1. The seat is foldable between a seated configuration 16 and a stowed configuration 18. The seats fold forward in such a manner so as to allow items to be placed on top of the seats when in the stowed position, but without increasing the useable floorspace.

The seat 10 pivots about two components on the floor of the vehicle; a lower pivotable connection in the form of a mounting unit 20 connected to the lower end of the back component 12, and a front floor pivot 22 connected to a front floor pivot member 24 which is pivotally connected at its upper end to the underside of the front of the base component 14. The seat back component and the base component are connected together via a connecting member 26, which connects pivotally to an intermediate region of the back component.

To move the seat 10 from the seated configuration 16 to the stowed configuration 18, the seat back component 12 is released from a latch connected to the vehicle and the top corner of the seat back component, allowing the seat back to move. The seat back component 12 is then rotated forwards (normally towards the front of the vehicle) about the mounting unit 20, which, by virtue of the connecting members 26, urges the base component 14 to translate forwards, in turn rotating the pivot member 24 about the floor pivot 22 and the upper connection to the base component 14. The pivot member 24 and the seat back component 12 pivot in a near parallel motion (hence the commonly used term "parallelogram" folding seat), however other folding methods and translatable couplings (e.g. sliders, tracks) of the base component can be envisaged. The seat can be seen in the stowed configuration 18 in (c).

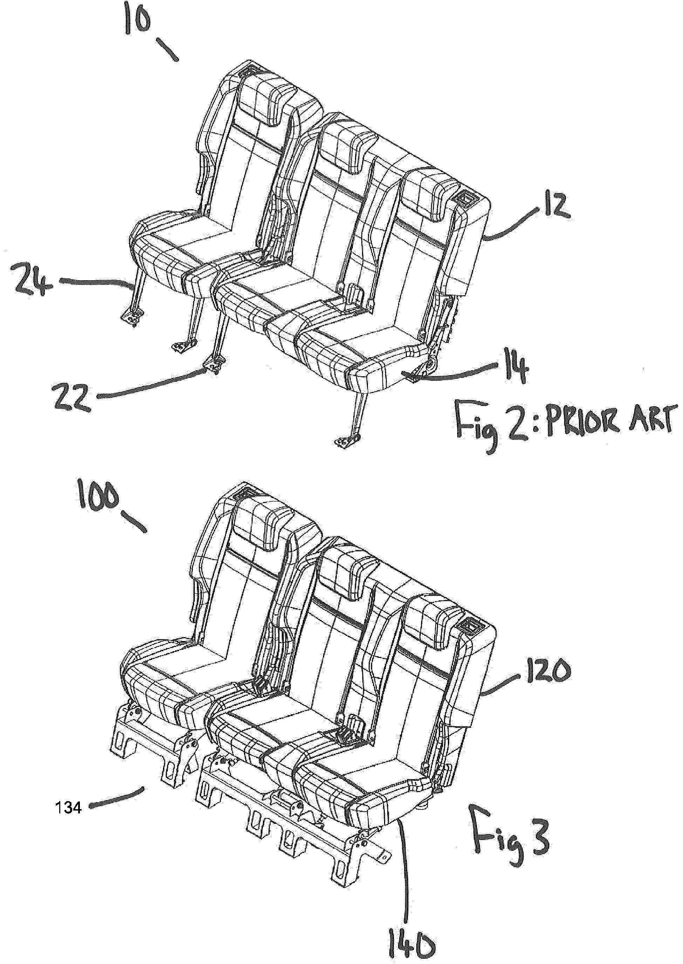

Figure 2 shows a plurality of folding seats 10 according to the prior art and as shown in Figure 1, when in the seated configuration 16. The seat on the left of the figure is shown with space for one person, whilst the seat on the right of the figure is shown with space for two persons. Each seat 10 is shown with two pivot members 24, connected to two floor pivots 22.

Figure 3 shows an adapted foldable seat 100 according to an embodiment of the present invention. A plurality of folding seats are shown, in a similar layout as Figure 2. Features in common with seat 10 are provided with like reference numerals incremented by 100, so 'seat 10' becomes 'seat 110' etc. The seat back component 120 can be seen along with the seat base component 140.

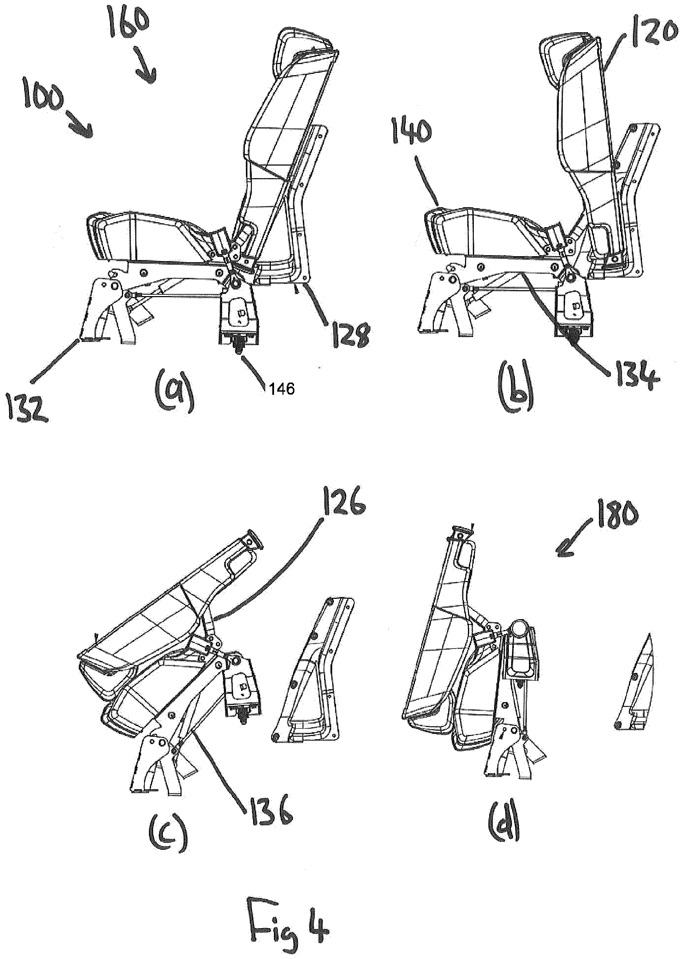

Figure 4 shows an apparatus according to an embodiment of the present invention, showing a seat in 4 different configurations; (a) in a seated configuration 160, (b) in the seated configuration with the back component disconnected from the car, (c) partially stowed configuration, (d) in the new stowed configuration 180. As can be seen, there is a significant increase in the size of useable floorspace when the seat is in the new stowed configuration 180.

The seat 100 has been adapted from the conventional parallelogram seat shown in Fig 1. The translational coupling in the form of the pivot member 24 has been removed and replaced by a frame 134. The lower pivotable connection, mounting unit 20, has been removed.

The frame provides the base component 140 with a forward pivotable connector 131 and a rearward releasable connection 146.

As discussed below with reference to Figs 4(a)-(d), the method provides for the translatable foldable vehicle seat 10 to be converted into a "tip and tumble" foldable vehicle seat 100. Since the entire adapted foldable seat can be pivoted forward around the forward pivotable connection, the method effectively increases the useable floor space of a vehicle, and to assist in accommodating a wheelchair passenger. The method further enables the majority of the vehicle's original translatably foldable seat to be re-used.

The seat 100 is moved from a first, seated position (a) to a second configuration (d) by first unlatching the back component 120 from the vehicle body and then rotating the top of the back forwards (b) about the intermediate pivotable connection at the end of the member 126. This causes the bottom of the back component 120 to rotate rearwards, which then contacts a recess which has been created in the vehicle body by the provision of an adapted piece of vehicle trim 128, has therefore been converted to accommodate the lower end of the back component 120 to rotate rearward, to the intermediate configuration shown in Fig. 4(b).

The rear part of the frame 134, at the coupling 146 is then released from the floor of the vehicle, allowing the apparatus to tilt forwards about a front assembly 132 of the frame 134, around the pivotable connection 131. The seat back 120 is tipped slightly forward and the top part is distanced from the connection 131 and provides a leverage to assist in tilting the entire seat 100.

The seat back component 120 is then rotated to lie against the seat base 140, as shown in Fig. 4 (c), whilst the seat base 140 is tilted forwards with the assistance of a gas strut 136. The gas strut is connected to the front assembly 132 and the underside of the frame 134, and provides a force to aid the user in lifting the seat 100. The seat 100 is then in the second, stowed configuration 180 in which the base component 140 is generally upright, where it locks into place (Fig. 4(d)). This prevents the seat from moving from the new stowed configuration without the user wanting this to happen. To move the seat 100 back into the seated configuration 160, the above is carried out in reverse order, after unlocking the seat from the second configuration 180.

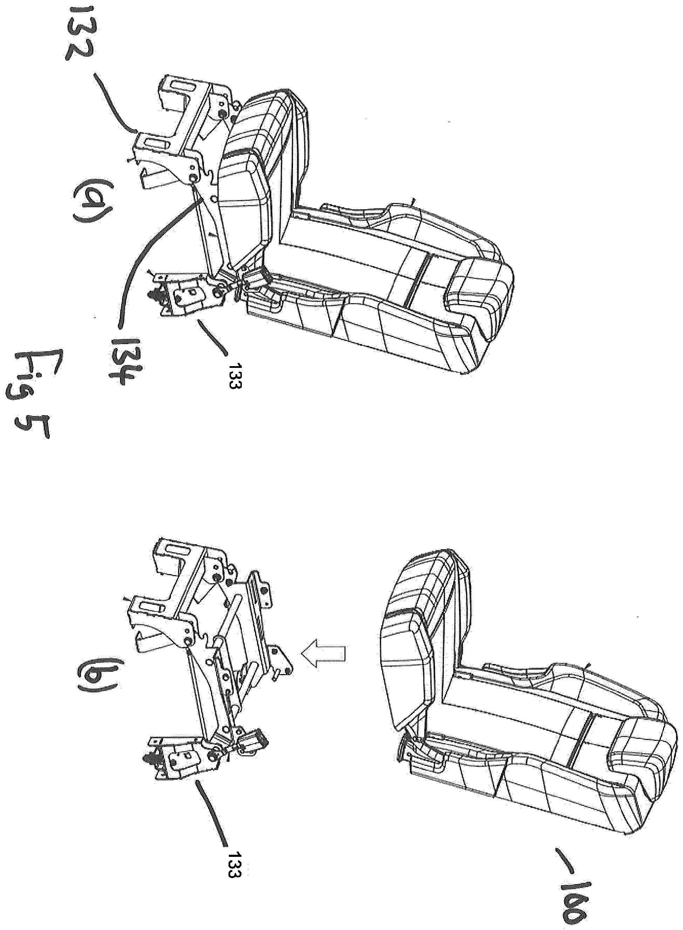

Figure 5 shows the seat 100 attached (a) to the frame 134 and detached (b) from the frame 134.

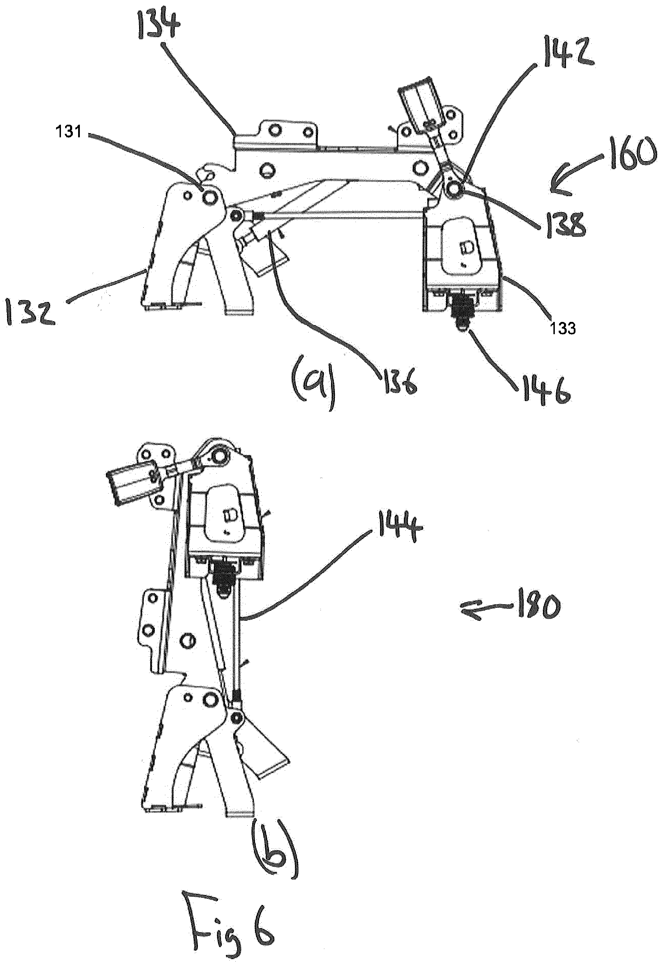

Figure 6(a) shows a side view of the frame 134 without the seat 100 mounted thereto, in the position of the frame when the seat 100 is in the first configuration 160 of Fig 4.(a). Figure 6(b) shows a side view of the frame 134 without the seat 100 mounted thereto, in the position of the frame when the seat 100 is in the second configuration 180 of Fig 4.(d).

The frame 134 includes the front assembly 132 (including leg portions that support the base component) via the forward pivotable connector 131 and attached to the rear assembly 133 via a rear pivot point 142. The gas strut 136 can also be seen, attached to the front assembly 132 and the frame 134. It can be appreciated that the gas strut 136 may be positioned in a different location and still produce the desired effect of reducing the force input required by the user. Other biasing or damping means may also be used.

A link arm 144 is pivotally attached to the front assembly 132 and the rear assembly 133, to maintain the orientation of the rear assembly 133 when pivoting the frame 134 around the forward pivotable connection 131. The link arm 144 ensures that when the rear assembly 133 is in the first, seated configuration 160 and in the second, stowed configuration 180, the rear assembly 133 remains generally vertically oriented, and thus the frame is as compact as possible when stowed and the connector 146 . When in the seated configuration 180, the rear assembly 133 is thus also maintained in the a vertical orientation required in order to re-engage the releasable connection 135.

As can be seen, the apparatus in the second stowed configuration 180 provides additional useable floorspace, which can be used to accommodate a wheelchair and user.

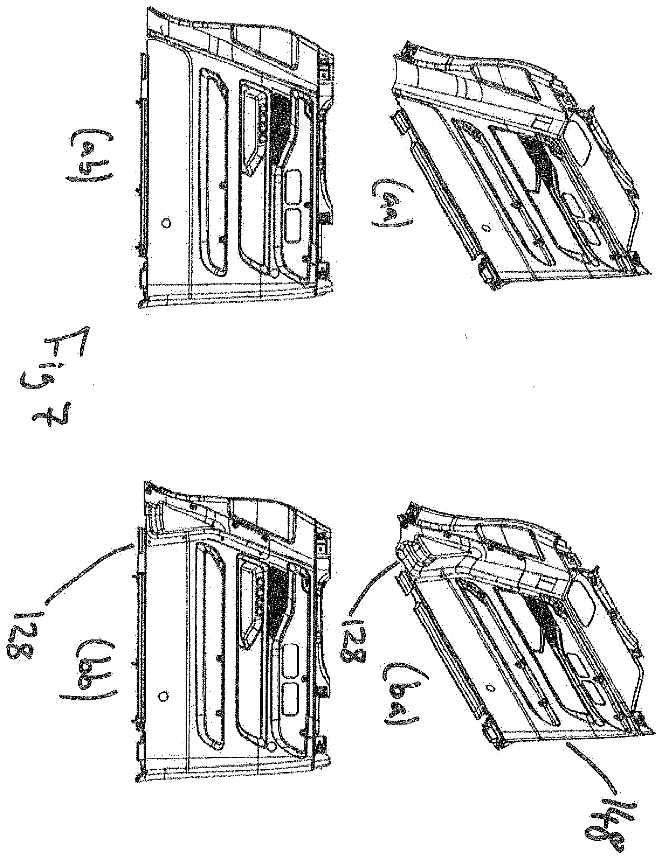

Figure 7 shows a section of a vehicle which the present invention would be used in, showing the section as standard (aa,ab) and modified (ba,bb). The vehicle body 148 is shown, along with the modified vehicle trim 128 section. This is modified by removing a portion to allow the seat from the original vehicle to rotate freely without being obstructed by the vehicle body 148. The portion of the vehicle body 148 where the modification takes place is usually the rear quarter panel, in the location immediately behind the rear seats. As can be appreciated, the invention as described enables a standard folding seat which folds flat in a horizontal orientation to be stowed in a vertical orientation, thereby creating more usable floor space behind the seat, which can be used for storing a wheelchair and user.

Whilst various exemplary embodiments have been disclosed, it shall be understood that variations, modifications and combinations of the apparatus and methods disclosed herein may be made as long as they remain within the scope of the appended claims.

## Claims

1. A method of adapting a translatably foldable seat of a vehicle;
wherein the translatably foldable seat comprises a back component (120) and a base component (140);
the back component (120) comprises at its lower end a lower pivotable connection to the vehicle; wherein the base component (140) comprises a translatable coupling to the vehicle; and
the back component (120) is pivotably coupled to the base component (140) via an intermediate coupling arrangement extending between an intermediate region of the back component (120) and the base component (140);
wherein the translatably foldable seat is moveable between a seated configuration in which the back component (120) is generally upright and a stowed configuration in which the back component (120) has pivoted around the lower pivotable connection to be generally horizontal; and
wherein, when the seat back component (120) pivots from the seated configuration towards the stowed configuration, the base component (140) translates forward and away from the lower pivotable connection;
the method comprising:
replacing the translatable coupling with a forward pivotable connection and a rear releasable coupling;
providing a stop formation, positioned to engage with the lower end of the back component (120) and thereby define the position of the back component (120) in an intermediate configuration in which the back component (120) is at least generally vertical, or tipped at least slightly forward;
coupling the base component (140) to the vehicle at the forward pivotable connection and the rear releasable coupling; and
removing the lower pivotable connection between the back component (120) and the vehicle to thereby provide an adapted foldable vehicle seat;
the adapted foldable vehicle seat being thereby movable between a first, seated configuration in which the back component (120) is generally upright and the base component (140) is generally horizontal; and a second configuration in which the back component (120) is generally aligned with the base component (140) and the base component (140) is generally upright; via the intermediate configuration.

2. The method of claim 1, comprising mounting the base component (140) to a frame, wherein the frame comprises the forward pivotable connection and the rearward releasable coupling.

3. The method of claim 1, comprising adapting the lower end of the back component (120) to provide an engagement formation to engage with the stop formation, and optionally slide in relation thereto when the adapted foldable seat pivots around the forward pivotable connection.

4. The method of any preceding claim, comprising adapting the vehicle in order to accommodate rearward movement of the lower end of the back component (120), when the back component (120) is moved from the first configuration towards the second configuration.

5. The method of claim 4, comprising adapting the vehicle by removing or adapting vehicle interior trim, and/or by a recess in the vehicle.

6. A vehicle comprising a foldable seat:
the foldable seat having a back component (120) and a base component (140);
wherein the back component (120) is pivotably coupled to the base component (140) via an intermediate coupling arrangement extending between an intermediate region of the back component (120) and the base component (140);
wherein the base component (140) is coupled to the vehicle at a forward pivotable connection and a rearward releasable connection;
wherein the vehicle comprises a stop formation positioned to engage with a lower end of the back component (120) when the back component (120) pivots around the intermediate pivotable connection to a position in which the back component (120) is at least generally vertical, or tipped at least slightly forward;
wherein the foldable seat is movable between a first, seated configuration in which the back component (120) is generally upright and the base component (140) is generally horizontal; and a second configuration in which the back component (120) is generally aligned with the base component (140) and the base component (140) is generally upright; via an intermediate configuration in which the lower end of the back component (120) is engaged with the stop formation.

7. The vehicle of claim 6, wherein the vehicle is adapted by the provision of a recess, to accommodate rearward movement of the lower end of the back component (120) when the back component (120) is moved from the first configuration towards the intermediate configuration.

8. The vehicle of claim 7, wherein the recess functions as the stop formation.

9. The vehicle of claim 6 or 7, wherein the base component (140) is be mounted to a frame, where in the frame comprises the forward pivotable connection and the rearward releasable coupling.

10. The vehicle of any one of claims 6 to 9, wherein motion of the foldable vehicle seat between the first and second configurations, between the first and intermediate configurations and/or between the second and intermediate configurations is biased and/or damped.

11. A foldable vehicle seat apparatus comprising:
a foldable vehicle seat having:
a back component (120) and a base component (140);
wherein the back component (120) is pivotably coupled to the base component (140) via an intermediate coupling arrangement extending between an intermediate region of the back component (120) and the base component (140);
a forward pivotable connection for connecting the base component (140) to a vehicle;
a rearward releasable connection for connecting the base component (140) to a vehicle behind the forward pivotable connection; and
the apparatus further comprising a stop formation positioned in fixed relation to the forward pivotable connection and positioned to engage with a lower end of the back component (120) when the back component (120) pivots around the intermediate pivotable connection to a position in which the back component (120) is at least generally vertical, or tipped at least slightly forward;
wherein the foldable seat is movable between a first, seated configuration in which the back component (120) is generally upright and the base component (140) is generally horizontal; and a second configuration in which the back component (120) is generally aligned with the base component and the base component (140) is generally upright; via an intermediate configuration in which the lower end of the back component (120) is engaged with the stop formation.

## Patentansprüche

1. Verfahren zum Anpassen eines verschiebbar klappbaren Sitzes eines Fahrzeugs;
wobei der verschiebbar klappbare Sitz ein Rückenbauteil (120) und ein Basisbauteil (140) umfasst;
das Rückenbauteil (120) an seinem unteren Ende eine untere schwenkbare Verbindung zum Fahrzeug umfasst; wobei das Basisbauteil (140) eine verschiebbare Kupplung zum Fahrzeug umfasst; und
das Rückenbauteil (120) schwenkbar mit dem Basisbauteil (140) über eine Zwischenkupplungsanordnung gekoppelt ist, die sich zwischen einem Zwischenbereich des Rückenbauteils (120) und dem Basisbauteil (140) erstreckt;
wobei der verschiebbar klappbare Sitz zwischen einer Sitzkonfiguration, in der das Rückenbauteil (120) im Allgemeinen aufrecht ist, und einer Verstaukonfiguration, in der das Rückenbauteil (120) um die untere schwenkbare Verbindung geschwenkt ist, um im Allgemeinen horizontal zu sein, bewegbar ist; und
wobei, wenn das Sitzrückenbauteil (120) von der Sitzkonfiguration in die Verstaukonfiguration schwenkt, das Basisbauteil (140) sich vorwärts und weg von der unteren schwenkbaren Verbindung verschiebt;
wobei das Verfahren umfasst:
Ersetzen der verschiebbaren Kupplung durch eine vorwärts schwenkbare Verbindung und eine rückwärtige lösbare Kupplung;
Bereitstellen einer Anschlagsformation, die so positioniert ist, dass sie mit dem unteren Ende des Rückenbauteils (120) in Eingriff gelangt und dadurch die Position des Rückenbauteils (120) in einer Zwischenkonfiguration definiert, in der das Rückenbauteil (120) mindestens im Allgemeinen vertikal ist, oder mindestens leicht vorwärts geneigt ist;
Koppeln des Basisbauteils (140) mit dem Fahrzeug an der vorwärts schwenkbaren Verbindung und der rückwärtigen lösbaren Kopplung; und
Entfernen der unteren schwenkbaren Verbindung zwischen dem Rückenbauteil (120) und dem Fahrzeug, um dadurch einen angepassten klappbaren Fahrzeugsitz bereitzustellen;
wobei der angepasste klappbare Fahrzeugsitz dadurch zwischen einer ersten, einer Sitzkonfiguration, in der das Rückenbauteil (120) im Allgemeinen aufrecht ist und das Basisbauteil (140) im Allgemeinen horizontal ist; und einer zweiten Konfiguration, in der das Rückenbauteil (120) im Allgemeinen auf das Basisbauteil (140) ausgerichtet ist und das Basisbauteil (140) im Allgemeinen aufrecht ist; über die Zwischenkonfiguration bewegbar ist.

2. Verfahren nach Anspruch 1, umfassend Montieren des Basisbauteils (140) an einem Rahmen, wobei der Rahmen die vorwärts schwenkbare Verbindung und die rückwärtige lösbare Kopplung umfasst.

3. Verfahren nach Anspruch 1, umfassend Anpassen des unteren Endes des Rückenbauteils (120), um eine Eingriffsformation bereitzustellen, um mit der Anschlagsformation in Eingriff zu gelangen und optional relativ dazu zu gleiten, wenn der angepasste klappbare Sitz um die vorwärts schwenkbare Verbindung schwenkt.

4. Verfahren nach einem vorhergehenden Anspruch, umfassend Anpassen des Fahrzeugs, um eine rückwärtige Bewegung des unteren Endes des Rückenbauteils (120) aufzunehmen, wenn das Rückenbauteil (120) von der ersten Konfiguration in die zweite Konfiguration bewegt wird.

5. Verfahren nach Anspruch 4, umfassend Anpassen des Fahrzeugs durch Entfernen oder Anpassen einer Fahrzeuginnenverkleidung und/oder durch eine Aussparung im Fahrzeug.

6. Fahrzeug, umfassend einen klappbaren Sitz:
wobei der klappbare Sitz ein Rückenbauteil (120) und ein Basisbauteil (140) aufweist;
wobei das Rückenbauteil (120) schwenkbar mit dem Basisbauteil (140) über eine Zwischenkupplungsanordnung gekoppelt ist, die sich zwischen einem Zwischenbereich des Rückenbauteils (120) und dem Basisbauteil (140) erstreckt;
wobei das Basisbauteil (140) mit dem Fahrzeug an einer vorwärts schwenkbaren Verbindung und einer rückwärtigen lösbaren Verbindung gekoppelt ist;
wobei das Fahrzeug eine Anschlagsformation umfasst, die so positioniert ist, dass sie mit einem unteren Ende des Rückenbauteils (120) in Eingriff gelangt, wenn das Rückenbauteil (120) um die schwenkbare Zwischenverbindung auf eine Position schwenkt, in der das Rückenbauteil (120) mindestens im Allgemeinen vertikal ist, oder mindestens leicht vorwärts geneigt ist;
wobei der klappbare Sitz zwischen einer ersten, einer Sitzkonfiguration, in der das Rückenbauteil (120) im Allgemeinen aufrecht ist und das Basisbauteil (140) im Allgemeinen horizontal ist; und einer zweiten Konfiguration, in der das Rückenbauteil (120) im Allgemeinen auf das Basisbauteil (140) ausgerichtet ist und das Basisbauteil (140) im Allgemeinen aufrecht ist; über eine Zwischenkonfiguration bewegbar ist, bei der das untere Ende des Rückenbauteils (120) mit der Anschlagsformation in Eingriff steht.

7. Fahrzeug nach Anspruch 6, wobei das Fahrzeug durch Bereitstellung einer Aussparung angepasst ist, um eine rückwärtige Bewegung des unteren Endes des Rückenbauteils (120) aufzunehmen, wenn das Rückenbauteil (120) von der ersten Konfiguration in die Zwischenkonfiguration bewegt wird.

8. Fahrzeug nach Anspruch 7, wobei die Aussparung als die Anschlagsformation wirkt.

9. Fahrzeug nach Anspruch 6 oder 7, wobei das Basisbauteil (140) an einem Rahmen montiert ist, worin der Rahmen die vorwärts schwenkbare Verbindung und die rückwärtige lösbare Kopplung umfasst.

10. Fahrzeug nach einem der Ansprüche 6 bis 9, wobei eine Bewegung des klappbaren Fahrzeugsitzes zwischen der ersten und der zweiten Konfiguration, zwischen der ersten und der Zwischenkonfiguration und/oder zwischen der zweiten und der Zwischenkonfiguration vorgespannt und/oder gedämpft ist.

11. Klappbare Fahrzeugsitzvorrichtung, umfassend:
einen klappbaren Fahrzeugsitz, der aufweist:
ein Rückenbauteil (120) und ein Basisbauteil (140);
wobei das Rückenbauteil (120) schwenkbar mit dem Basisbauteil (140) über eine Zwischenkupplungsanordnung gekoppelt ist, die sich zwischen einem Zwischenbereich des Rückenbauteils (120) und dem Basisbauteil (140) erstreckt;
eine vorwärts schwenkbare Verbindung zum Verbinden des Basisbauteils (140) mit einem Fahrzeug;
eine rückwärtige lösbare Verbindung zum Verbinden des Basisbauteils (140) mit einem Fahrzeug hinter der vorwärts schwenkbaren Verbindung; und
wobei die Vorrichtung ferner eine Anschlagsformation umfasst, die in fester Beziehung zur vorwärts schwenkbaren Verbindung positioniert ist und so positioniert ist, dass sie mit einem unteren Ende des Rückenbauteils (120) in Eingriff gelangt, wenn das Rückenbauteil (120) um die schwenkbare Zwischenverbindung auf eine Position schwenkt, in der das Rückenbauteil (120) mindestens im Allgemeinen vertikal ist, oder mindestens leicht nach vorwärts geneigt ist;
wobei der klappbare Sitz zwischen einer ersten, einer Sitzkonfiguration, in der das Rückenbauteil (120) im Allgemeinen aufrecht ist und das Basisbauteil (140) im Allgemeinen horizontal ist; und einer zweiten Konfiguration, in der das Rückenbauteil (120) im Allgemeinen auf das Basisbauteil ausgerichtet ist und das Basisbauteil (140) im Allgemeinen aufrecht ist; über eine Zwischenkonfiguration bewegbar ist, bei der das untere Ende des Rückenbauteils (120) mit der Anschlagsformation in Eingriff steht.

## Revendications

1. Procédé d'adaptation d'un siège pliable en translation d'un véhicule ;
ledit siège pliable en translation comprenant un composant dossier (120) et un composant base (140) ;
le composant dossier (120) comprend au niveau de son extrémité inférieure une liaison pivotante inférieure au véhicule ;
ledit composant base (140) comprenant un couplage déplaçable en translation au véhicule ; et
le composant dossier (120) est couplé de manière pivotante au composant base (140) par l'intermédiaire d'un agencement de couplage intermédiaire s'étendant entre une zone intermédiaire du composant dossier (120) et le composant base (140) ;
ledit siège pliable en translation étant mobile entre une configuration assise dans laquelle le composant dossier (120) est globalement droit et une configuration rangée dans laquelle le composant dossier (120) a pivoté autour de la liaison pivotante inférieure pour être globalement horizontal ; et
lorsque le composant dossier de siège (120) pivote de la configuration assise vers la configuration rangée, ledit composant base (140) se translatant vers l'avant et s'éloignant de la liaison pivotante inférieure ;
le procédé comprenant :
le remplacement du couplage déplaçable en translation par une liaison pivotante vers l'avant et un couplage libérable arrière ;
la fourniture d'une formation d'arrêt, positionnée pour se mettre en prise avec l'extrémité inférieure du composant dossier (120) et définir ainsi la position de composant dossier (120) dans une configuration intermédiaire dans laquelle le composant dossier (120) est au moins globalement vertical, ou incliné au moins légèrement vers l'avant ;
le couplage du composant base (140) au véhicule au niveau de la liaison pivotante vers l'avant et du couplage libérable arrière ; et
le retrait de la liaison pivotante inférieure entre le composant dossier (120) et le véhicule pour fournir ainsi un siège de véhicule pliable adapté ;
le siège de véhicule pliable adapté étant ainsi mobile entre une première configuration assise dans laquelle le composant dossier (120) est globalement droit et le composant base (140) est globalement horizontal ; et
une seconde configuration dans laquelle le composant dossier (120) est globalement aligné avec le composant base (140) et le composant base (140) est globalement droit ;
par l'intermédiaire de la configuration intermédiaire.

2. Procédé selon la revendication 1, comprenant le montage du composant base (140) sur un châssis, ledit châssis comprenant la liaison pivotante vers l'avant et le couplage libérable vers l'arrière.

3. Procédé selon la revendication 1, comprenant l'adaptation de l'extrémité inférieure du composant dossier (120) pour fournir une formation de mise en prise pour se mettre en prise avec la formation d'arrêt, et éventuellement coulisser par rapport à celle-ci lorsque le siège pliable adapté pivote autour de la liaison pivotante vers l'avant.

4. Procédé selon une quelconque revendication précédente, comprenant l'adaptation du véhicule afin de concilier le mouvement vers l'arrière de l'extrémité inférieure du composant dossier (120), lorsque le composant dossier (120) est déplacé de la première configuration vers la seconde configuration.

5. Procédé selon la revendication 4, comprenant l'adaptation du véhicule par la suppression ou l'adaptation de la garniture intérieure du véhicule, et/ou par un évidement dans le véhicule.

6. Véhicule comprenant un siège pliable :
le siège pliable comportant un composant dossier (120) et un composant base (140) ;
ledit composant dossier (120) étant couplé de manière pivotante au composant base (140) par l'intermédiaire d'un agencement de couplage intermédiaire s'étendant entre une zone intermédiaire du composant dossier (120) et le composant base (140) ;
ledit composant base (140) étant couplé au véhicule au niveau d'une liaison pivotante vers l'avant et d'une liaison libérable vers l'arrière ;
ledit véhicule comprenant une formation d'arrêt positionnée pour se mettre en prise avec une extrémité inférieure du composant dossier (120) lorsque le composant dossier (120) pivote autour de la liaison pivotante intermédiaire vers une position dans laquelle le composant dossier (120) est au moins globalement vertical, ou incliné au moins légèrement vers l'avant ;
ledit siège pliable étant mobile entre une première configuration assise dans laquelle le composant dossier (120) est globalement droit et le composant base (140) est globalement horizontal ; et
une seconde configuration dans laquelle le composant dossier (120) est globalement aligné avec le composant base (140) et le composant base (140) est globalement droit ;
par l'intermédiaire d'une configuration intermédiaire dans laquelle l'extrémité inférieure du composant dossier (120) est en prise avec la formation d'arrêt.

7. Véhicule selon la revendication 6, ledit véhicule étant adapté par la fourniture d'un évidement, pour concilier le mouvement vers l'arrière de l'extrémité inférieure du composant dossier (120) lorsque le composant dossier (120) est déplacé de la première configuration vers la configuration intermédiaire.

8. Véhicule selon la revendication 7, ledit évidement fonctionnant en tant que formation d'arrêt.

9. Véhicule selon la revendication 6 ou 7, ledit composant base (140) étant être monté sur un châssis, où dans le châssis comprenant la liaison pivotante vers l'avant et le couplage libérable vers l'arrière.

10. Véhicule selon l'une quelconque des revendications 6 à 9, ledit mouvement du siège de véhicule pliable entre les première et seconde configurations, entre les configurations première et intermédiaire et/ou entre les configurations seconde et intermédiaire étant sollicité et/ou amorti.

11. Appareil de siège de véhicule pliable comprenant :
un siège de véhicule pliable comportant :
un composant dossier (120) et un composant base (140) ;
ledit composant dossier (120) étant couplé de manière pivotante au composant base (140) par l'intermédiaire d'un agencement de couplage intermédiaire s'étendant entre une zone intermédiaire du composant dossier (120) et le composant base (140) ;
une liaison pivotante vers l'avant pour relier le composant base (140) à un véhicule ;
une liaison libérable vers l'arrière pour relier le composant base (140) à un véhicule derrière la liaison pivotante vers l'avant ; et
l'appareil comprenant en outre une formation d'arrêt positionnée en relation fixe par rapport à la liaison pivotante vers l'avant et positionnée pour se mettre en prise avec une extrémité inférieure du composant dossier (120) lorsque le composant dossier (120) pivote autour de la liaison pivotante intermédiaire vers une position dans laquelle le composant dossier (120) est au moins globalement vertical, ou incliné au moins légèrement vers l'avant ;
ledit siège pliable étant mobile entre une première configuration assise dans laquelle le composant dossier (120) est globalement droit et le composant base (140) est globalement horizontal ; et
une seconde configuration dans laquelle le composant dossier (120) est globalement aligné avec le composant base et le composant base (140) est globalement droit ;
par l'intermédiaire d'une configuration intermédiaire dans laquelle l'extrémité inférieure du composant dossier (120) est en prise avec la formation d'arrêt.
